# EUROPEAN PATENT SPECIFICATION

(11) **EP 3 489 536 B1**
(45) Date of publication and mention of the grant of the patent: **04.11.2020**
(21) Application number: 18175558.8
(22) Date of filing: 01.06.2018
(51) Int. Cl.: F16D 3/84

(54) **COMPACT BOOT OF A CONSTANT VELOCITY JOINT**
KOMPAKTMANSCHETTE EINES GLEICHLAUFGELENKS
SOUFFLET COMPACT D'UN JOINT HOMOCINÉTIQUE

(30) Priority: 28.11.2017 KR 20170159812
(43) Date of publication of application: 29.05.2019
(73) Proprietor: Kunhwa Eng Co., Ltd., Gyeongsan-si, Gyeongsangbuk-do 38465 (KR)
(72) Inventor: KIM, In Tae, 38693 Gyeongsangbuk-do (KR); KIM, Young Chun, Daegu 42262 (KR)
(74) Representative: advotec.

(56) References cited:
- FR-A- 1 248 548
- JP-U- S56 109 424
- US-A- 4 747 805
- US-A1- 2008 194 344

## Description

### Technical Field

The present disclosure relates to a compact boot of a constant velocity joint, and more specifically, to a compact boot of a constant velocity joint capable of improving durability by preventing buckling phenomenon and reducing the possibility of boot damage due to contact with a foreign matter or an external structure.

### Background Art

In general, a drive wheel of a vehicle is connected to a drive shaft that transmits driving force from an engine, and a constant velocity joint is installed between the drive shaft and the drive wheel of the vehicle so that the driving force from the engine can be constantly transmitted regardless of the change in angle of the drive wheel.

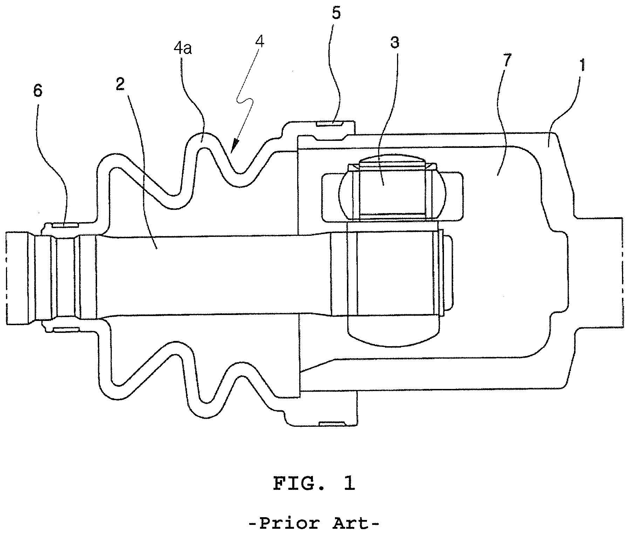

The constant velocity joint as illustrated in FIG. 1 comprises a drive shaft 2 to which a rotational power of an engine is transmitted and on which a position fixing groove is formed, a spider assembly 3 connected to the drive shaft 2, a housing 1 surrounding the outer surface of the spider assembly 3, a boot 4 of which opposite ends are connected to the housing 1 and the drive shaft 2 respectively for sealing the connection between the housing 1 and the drive shaft 2, clamping bands 5, 6 for clamping the boot 4 tightly to the housing 1 and the drive shaft 2, and a lubricant 7 Injected into the inside of the boot 4 and sealed thereafter.

Since the constant velocity joint of the vehicle having such a configuration as described above slides while rotating at a high speed, a lubricant 7 such as grease is necessarily required for satisfactory lubrication of this portion. In order to prevent contamination and leakage of the lubricant 7, the boot 4 is provided.

The boot 4 is provided in a shape of bellows composed of a radially formed corrugated portion 4a of the boot 4 as shown in FIG. 1 so that it can be bent with the change of the angle of the drive wheel. The boot 4 is hermetically coupled to the drive shaft and the drive wheel of the vehicle by clamps, respectively.

However, since the conventional constant velocity joint boot 4 of the vehicle described above is located at the lower part of the vehicle, there is a high possibility that the corrugated portion 4a may be damaged by being exposed to the foreign material on the road surface. The boot 4 has to be made up of a material having good elasticity in order to use the bending characteristic. The boot 4 is likely to be damaged since the end portion of the corrugated portion 4a is radially exposed to the outside.

In case the corrugated portion 4a is removed due to the breakage of an end portion of the wrinkle 4a, damage of the boot 4 can be caused by crack due to buckling phenomenon during the expansion and contraction of the boot 4 by the change in angle of the drive wheel.

Documents FR1248548 A, JP356109424 U, US4747805 A and US2008/194344 A1 disclose examples of boots for constant velocity joints.

Accordingly, there is a need for a compact boot of a constant velocity joint of a vehicle which can ensure the durability by reducing the possibility of damage of the boot due to contact with a foreign matter or an external structure and preventing buckling phenomenon.

### Disclosure

### Technical Problem

The present disclosure is directed to reducing the possibility of damaging the constant velocity joint boot due to contact with a foreign matter or an external structure and improving the durability of the constant velocity joint by preventing the occurrence of cracks due to buckling phenomenon.

### Technical Solution

A compact boot of constant velocity joint according to claim 1.

### Advantageous Effects

The exemplary embodiments of the present disclosure can reduce the possibility of damage to the boot of constant velocity joint due to contact with a foreign matter or an external structure.

In addition, the exemplary embodiments of the present disclosure can improve the durability of the boot of constant velocity joint by preventing the occurrence of a crack due to buckling phenomenon.

### Description of Drawings

FIG. 1 is a cross-sectional view of a boot of constant velocity in a vehicle according to the related art.
FIG. 2 is a perspective view of a boot having the corrugated portion made up of two peaks as seen from the side of the large diameter portion according to an embodiment of the present disclosure.
FIG. 3 is a perspective view of a boot having the corrugated portion made up of two peaks as seen from the side of the small diameter portion according to an embodiment of the present disclosure.
FIG. 4 is a cross-sectional view of the boot having the corrugated portion made up of two peaks according to an embodiment of the present disclosure.
FIG. 5 is a perspective view of a boot having the corrugated portion made up of three peaks as seen from the side of the large diameter portion according to an embodiment of the present disclosure.
FIG. 6 is a perspective view of a boot having the corrugated portion made up of three peaks as seen from the side of the small diameter portion according to an embodiment of the present disclosure.
FIG. 7 is a cross-sectional view of a boot having the corrugated portion made up of three peaks according to an embodiment of the present disclosure.
FIG. 8 is a perspective view of a boot having the corrugated portion made up of four peaks as seen from the side of the large diameter portion according to an embodiment of the present disclosure.
FIG. 9 is a perspective view of a boot having the corrugated portion made up of four peaks as seen from the side of the small diameter portion according to an embodiment of the present disclosure.
FIG. 10 is a cross-sectional view of a boot having the corrugated portion made up of four peaks according to an embodiment of the present disclosure.

### Best Mode

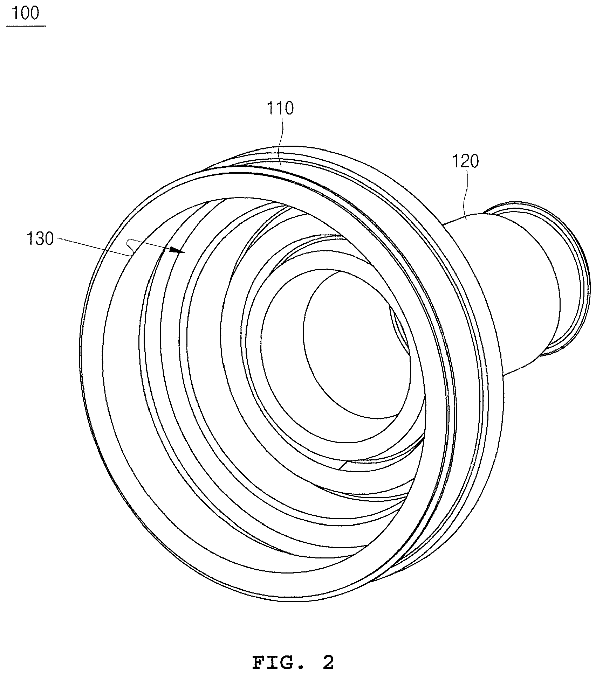

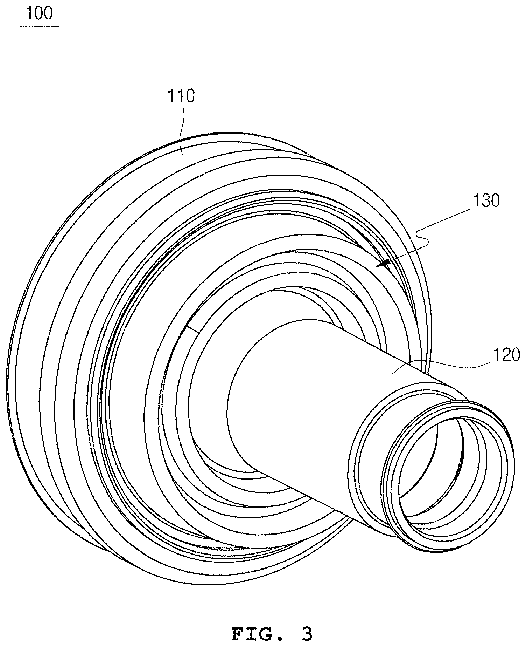

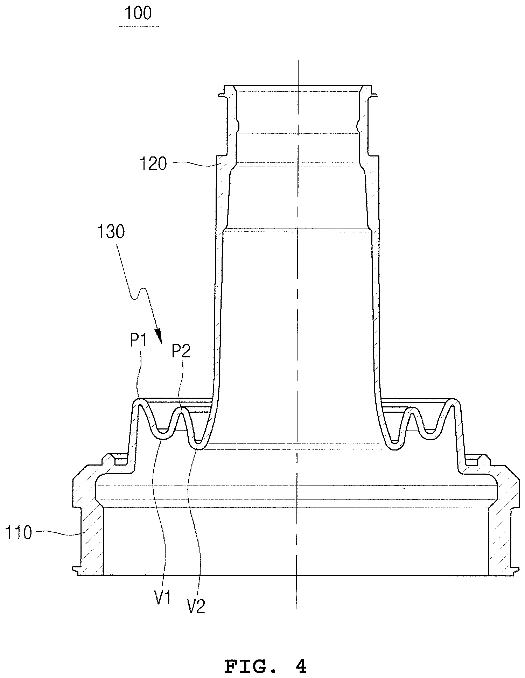

FIG. 2 is a perspective view of a boot having the corrugated portion made up of two peaks as seen from the side of the large diameter portion according to an embodiment of the present disclosure, FIG. 3 is a perspective view of a boot having the corrugated portion made up of two peaks as seen from the side of the small diameter portion according to an embodiment of the present disclosure, and FIG. 4 is a cross-sectional view of the boot having the corrugated portion made up of two peaks according to an embodiment of the present disclosure.

As shown in FIG. 2 to FIG. 4, a compact boot 100 of a constant velocity joint according to an exemplary embodiment of the present disclosure includes a large diameter portion 110 connected to the housing (not shown, see FIG. 1) of the constant velocity joint; a small diameter portion 120 connected to the drive shaft (not shown, see FIG. 1) of the constant velocity joint, positioned in the same central axis as the large diameter portion, and having a smaller external diameter than the large diameter portion; and a corrugated portion 130 connecting between the large diameter portion 110 and the small diameter portion 120, and having a plurality of peaks P1, P2 and valleys V1, V2.

The large diameter portion 110 and the small diameter portion 120 are in a shape of a hollow cylinder and extended to a certain length. Here, the large diameter portion 110 and the small diameter portion 120 are positioned with reference to the same central axis, and the large diameter portion 110 may be formed to have a larger external diameter than the small diameter portion 120.

As shown in FIG. 4, the large diameter portion 110 illustrated in the lower part of the drawing is formed in a shape of a cylinder having a larger external diameter than the small diameter portion 120, but its length to be extended may be smaller than the small diameter portion. On contrary, the small diameter portion 120 has a smaller diameter than the large diameter portion 110, and its extended length may be relatively longer than the large diameter portion 110.

Meanwhile, the large diameter portion 110 and the small diameter portion 120 are connected by the corrugated portion 130. As shown in FIG. 4, the corrugated portion 130 is made up of a plurality of peaks P1, P2, and valleys V1, V2. In the present embodiment, the corrugated portion as the two-valley type has two peaks P1, P2 and two valleys V1, V2 each.

Here, the plurality of peaks P1, P2 and valleys V1, V2 are formed to be parallel with the central axis of the large diameter portion 110 and the small diameter portion 120, and accordingly the plurality of peaks P1, P2 are not radially protruded to be converged between the external diameter of the large diameter portion 110 and the external diameter of the small diameter portion 120.

Since the peaks P1, P2 of the corrugated portion 130 are not radially protruded to be converged between the large diameter portion 110 and the small diameter portion 120 unlike the conventional art, it is possible to reduce the possibility of damage to the boot of the constant velocity joint 100 due to contact with a foreign matter or an external structure.

In addition, the durability of the boot of the constant velocity joint may be improved by forming the corrugated portion 130 made up of the plurality of peaks P1, P2, and valleys V1, V2 to prevent the occurrence of cracks due to buckling phenomenon.

In addition, the plurality of peaks P1, P2 are configured to have the lower level from the large diameter portion 110 toward the small diameter portion 120, and the plurality of valleys V1, V2 are be configured to have the lower level from the large diameter portion 110 toward the small diameter portion 120.

As shown in FIG. 4, the peak P2 adjacent to the small diameter portion 120 is formed to be lower than the peak P1 adjacent to the large diameter portion 110, and the valley V2 adjacent to the small diameter portion 120 is formed to be lower than the valley V1 adjacent to the large diameter portion 110.

Accordingly, the plurality of peaks P1, P2 are configured to have the lower level from the large diameter portion 110 toward the small diameter portion 120, and the plurality of valleys V1, V2 are be configured to have the lower level from the large diameter portion 110 toward the small diameter portion 120.

Accordingly, since the overall height of the corrugated portion 130 gets lower from the large diameter portion 110 toward the small diameter portion 120, the portion to be exposed to the outside gets smaller, thereby reducing further the possibility of contact with a foreign matter or an external structure.

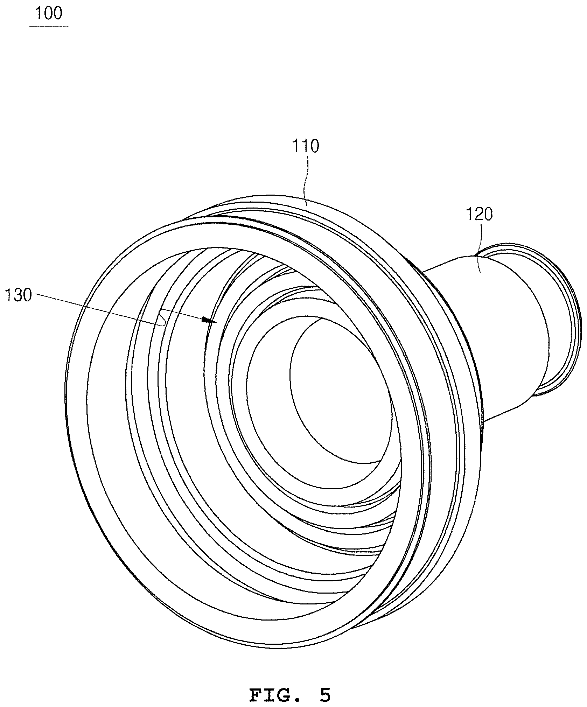

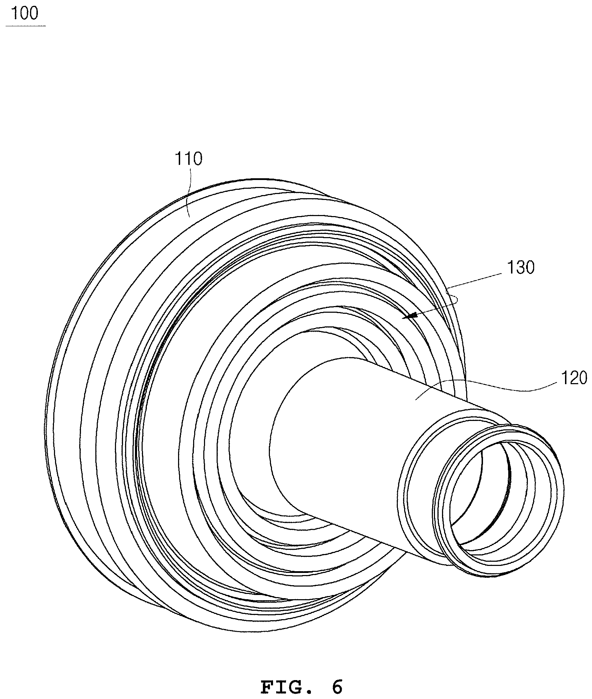

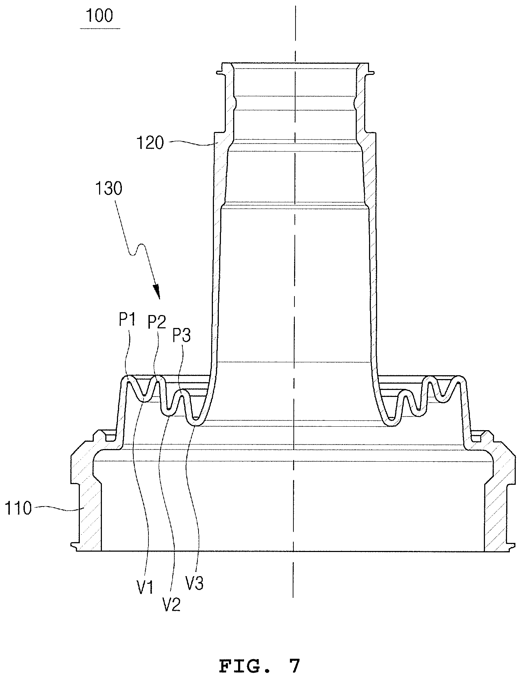

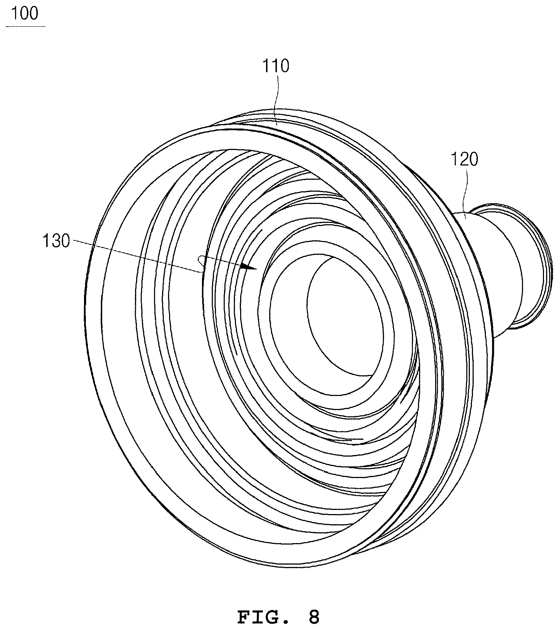

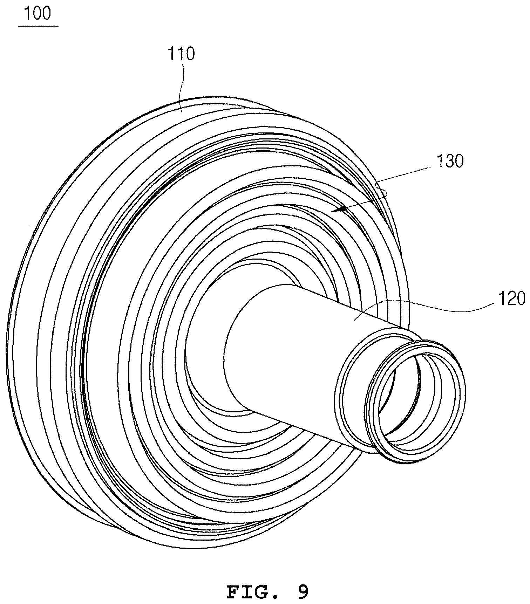

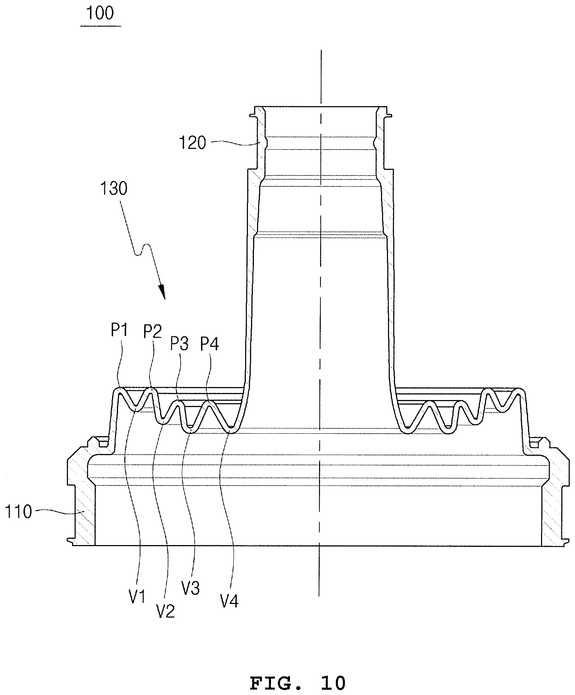

FIG. 5 is a perspective view of a boot having the corrugated portion made up of three peaks as seen from the side of the large diameter portion according to an embodiment of the present disclosure, FIG. 6 is a perspective view of a boot having the corrugated portion made up of three peaks as seen from the side of the small diameter portion according to an embodiment of the present disclosure, FIG. 7 is a cross-sectional view of a boot having the corrugated portion made up of three peaks according to an embodiment of the present disclosure, FIG. 8 is a perspective view of a boot having the corrugated portion made up of four peaks as seen from the side of the large diameter portion according to an embodiment of the present disclosure, FIG. 9 is a perspective view of a boot having the corrugated portion made up of four peaks as seen from the side of the small diameter portion according to an embodiment of the present disclosure, and FIG. 10 is a cross-sectional view of a boot having the corrugated portion made up of four peaks according to an embodiment of the present disclosure.

As shown in FIG. 5 to FIG. 10, the boot of the constant velocity joint 100 according to this embodiment has the corrugated portion 130 made up of 3 peak type or 4 peak type. FIG. 5 to FIG. 7 show the boot of the constant velocity joint 100 made up of 3 peak type.

As shown in FIG. 7, the boot of the constant velocity joint 100 is made up of three peaks P1, P2, P3, and three valleys V1, V2, V3 each. Like the embodiment above, the plurality of peaks P1, P2, P3 are configured to have the lower level from the large diameter portion 110 toward the small diameter portion 120, and the plurality of valleys V1, V2, V3 are be configured to have the lower level from the large diameter portion 110 toward the small diameter portion 120.

As shown in FIG. 7, the peak P1 adjacent to the large diameter portion 110 and the peak P2 adjacent to the small diameter portion are formed in the same height, and the peak P3 is formed to be lower, thereby going lower overall toward the small diameter portion 120.

In addition, the valley V2 adjacent to the small diameter portion 120 is formed to be lower than the valley V1 adjacent to the large diameter portion 110, and the valley V3 adjacent to the inner portion is formed to be lower, thereby also going lower overall toward the small diameter portion 120.

Accordingly, the plurality of peaks P1, P2, P3 are configured to have the lower level from the large diameter portion 110 toward the small diameter portion 120, and the plurality of valleys V1, V2, V3 are be configured to have the lower level from the large diameter portion 110 toward the small diameter portion 120.

In the case of a four-peak type, as shown in FIG. 8 to FIG. 10, the peaks P1, P2, P3, P4 and the valleys V1, V2, V3, V4 go lower from the large diameter portion 110 toward the small diameter portion 120 like the embodiments above.

Accordingly, the plurality of peaks P1, P2, P3, P4 are configured to have the lower level from the large diameter portion 110 toward the small diameter portion 120, and the plurality of valleys V1, V2, V3, V4 are be configured to have the lower level from the large diameter portion 110 toward the small diameter portion 120.

In addition, as the number of peaks P1, P2, P3, P4 and valleys V1, V2, V3, V4 of the corrugated portion 130 are increased, buckling phenomenon is more likely to be prevented.

The compact boot of the constant velocity joint according to the embodiments of the present disclosure as described above is capable of improving durability by preventing buckling phenomenon and reducing the possibility of boot damage due to contact with a foreign matter or an external structure.

## Claims

1. A compact boot of a constant velocity joint (100) having a housing and a drive shaft comprising:
a large diameter portion (110) connected to the housing;
a small diameter portion (120) connected to the drive shaft, positioned in the same central axis as the large diameter portion, and having a smaller external diameter than the large diameter portion; and
a corrugated portion (130) connecting between the large diameter portion and the small diameter portion, and having a plurality of peaks (P1, P2, P3, P4) and valleys (V1, V2, V3, V4),
wherein the plurality of peaks are not radially protruded to be converged between the external diameter of the large diameter portion and the external diameter of the small diameter portion,
**characterized in that** the plurality of peaks are configured to have the lower level from the large diameter portion toward the small diameter portion and the plurality of valleys are configured to have the lower level from the large diameter portion toward the small diameter portion.

## Patentansprüche

1. Kompakte Manschette eines homokinetischen Gelenks (100) mit einem Gehäuse und einer Antriebswelle, umfassend:
einen mit dem Gehäuse verbundenen Abschnitt mit großem Durchmesser (110);
einen mit der Antriebswelle verbundenen Abschnitt mit kleinem Durchmesser (120), der in derselben Mittelachse wie der Abschnitt mit großem Durchmesser angeordnet ist und einen kleineren Außendurchmesser als der Abschnitt mit großem Durchmesser aufweist; und
einen geriffelten Abschnitt (130), der den Abschnitt mit dem großen Durchmesser mit dem Abschnitt mit dem kleinen Durchmesser verbindet und eine Vielzahl von Spitzen (P1, P2, P3, P4) und Tälern (V1, V2, V3, V4) aufweist,
wobei die Vielzahl von Spitzen nicht radial hervorragt, so dass sie zwischen dem Außendurchmesser des Abschnitts mit großem Durchmesser und dem Außendurchmesser des Abschnitts mit kleinem Durchmesser zusammenläuft,
**dadurch gekennzeichnet, dass** die Vielzahl von Spitzen derart ausgebildet ist, dass sie die tiefer gelegene Ebene von dem Abschnitt mit großem Durchmesser in Richtung des Abschnitts mit kleinem Durchmesser aufweist und, dass die Vielzahl von Tälern derart ausgebildet ist, dass sie die tiefer gelegene Ebene von dem Abschnitt mit großem Durchmesser in Richtung des Abschnitts mit kleinem Durchmesser aufweist.

## Revendications

1. Soufflet compact pour un joint homocinétique (100) ayant un boîtier et un arbre d'entraînement, comprenant :
une partie de grand diamètre (110) reliée au boîtier ;
une partie de petit diamètre (120) reliée à l'arbre d'entraînement, positionnée dans le même axe central que la partie de grand diamètre et ayant un diamètre extérieur plus petit que la partie de grand diamètre ; et
une partie ondulée (130) reliant la partie de grand diamètre à la partie de petit diamètre et ayant une pluralité de crêtes (P1, P2, P3, P4) et une pluralité de creux (V1, V2, V3, V4),
dans lequel la pluralité de crêtes ne fait pas saillie radialement de manière à ce qu'elle converge entre le diamètre extérieur de la partie de grand diamètre et le diamètre extérieur de la partie de petit diamètre,
**caractérisé en ce que** la pluralité de crêtes est configurée de manière qu'elle a le niveau inférieur de la partie de grand diamètre vers la partie de petit diamètre et **en ce que** la pluralité de creux est configurée de manière qu'elle a le niveau inférieur de la partie de grand diamètre vers la partie de petit diamètre.
